Europäisches Patentamt

European Patent Office

Office européen des brevets

(19)

(11) Numéro de publication: **0 089 295**
A2

(12) **DEMANDE DE BREVET EUROPEEN**

(21) Numéro de dépôt: 83400544.9

(22) Date de dépôt: 16.03.83

(51) Int. Cl.³: **G 01 B 7/00**
**G 06 K 11/06**

(30) Priorité: 17.03.82 FR 8204486

(43) Date de publication de la demande:
21.09.83 Bulletin 83/38

(84) Etats contractants désignés:
AT BE CH DE GB IT LI LU NL SE

(71) Demandeur: SFERNICE SOCIETE FRANCAISE DE
L'ELECTRO-RESISTANCE
59, rue Gutenberg
F-75737 Paris Cedex 15(FR)

(72) Inventeur: Peyraud, Jean
7, avenue Auguste Galtier
F-06230 Villefranche(FR)

(72) Inventeur: Scursoglio, Roger
29, avenue Joseph Giordan
F-06200 Nice(FR)

(74) Mandataire: Bouju, André
38 Avenue de la Grande Armée
F-75017 Paris(FR)

(54) Dispositif électronique de guidage.

(57) Le dispositif comprend un manche de guidage (1) portant un palpeur (5) déplaçable sur une surface électriquement résistante (6).

Cette surface (6) porte quatre zones conductrices (12, 13, 14, 15) disposées aux sommets d'un carré et reliées à un circuit électronique permettant d'appliquer à deux zones conductrices diamétralement opposées (13, 15) respectivement des potentiels fixes et aux deux autres zones conductrices (12, 14) alternativement et respectivement des potentiels positifs et négatifs et des potentiels inverses. Le long des côtés du carré et entre les zones conductrices (12...15) est disposée une série d'éléments conducteurs (16, 17...) dont les extrémités (16a, ...) sont situées sur une courbe convexe.

Utilisation notamment pour déplacer des spots lumineux sur un écran.

FIG.1

EP 0 089 295 A2

./...

FIG. 2

"Dispositif électronique de guidage"

La présente invention concerne un dispositif électronique de guidage ou de pilotage.

Les dispositifs connus de guidage ou de pilotage comprennent un manche de guidage communément appelé "joy stick" mobile dans toutes les directions par rapport à un plan et associé à deux curseurs déplaçables simultanément sur deux potentiomètres disposés suivant deux directions perpendiculaires. Ces deux potentiomètres sont associés à un circuit électronique délivrant deux tensions qui sont fonction des positions respectives des curseurs sur les deux potentiomètres.

En assimilant les directions de déplacement des curseurs à deux axes de coordonnées orthogonaux, il est ainsi possible d'obtenir que les deux tensions délivrées aux sorties du circuit électronique soient proportionnelles aux coordonnées de la position de l'extrémité du manche de guidage par rapport aux deux axes de coordonnées précités.

A partir de ces deux tensions, il est possible par exemple de commander le déplacement d'un spot ou d'un objet sur une surface plane, notamment dans le cas des jeux électroniques ou de régler un dispositif à faisceau laser.

Dans les dispositifs connus, la liaison entre le manche de guidage et les potentiomètres est mécanique. Cette liaison mécanique comprend des engrenages et/ou des joints cardan et est de ce fait, complexe, onéreuse, peu précise, encombrante et peu fiable.

Le but de la présente invention est de remédier aux inconvénients des réalisations connues en créant un dispositif de guidage qui soit de construction simple, précis et dont l'encombrement peut être très réduit.

Le dispositif visé par l'invention comprend un manche de guidage portant un palpeur déplaçable suivant un plan défini par des axes de coordonnées orthogonaux, et associé à un circuit électronique capable de fournir pour tout point du plan balayé par le palpeur deux tensions proportionnelles aux coordonnées de ce point.

Suivant l'invention, ce dispositif est caractérisé en ce que le palpeur est déplaçable sur une surface électriquement résistante portant quatre zones conductrices disposées aux sommets d'un carré et reliées respectivement à un circuit électronique permettant d'appliquer à deux zones conductrices diamétralement opposées, respectivement des potentiels fixes +V et -V et aux deux autres zones conductrices, alternativement et respectivement des potentiels +V et -V et des potentiels inverses -V et +V et en ce que le long des côtés du carré et entre les zones conductrices est disposée une série d'éléments · conducteurs séparés les uns des autres et dont les extrémités dirigées vers le côté opposé du carré sont situées sur une courbe dont la convexité est dirigée vers ledit côté opposé et qui est symétrique par rapport à la médiane passant par ce côté.

On crée ainsi sur la surface électriquement résistante successivement des équipotentielles parallèles à deux côtés opposés du carré, puis parallèles aux deux autres côtés de ce carré. Les éléments conducteurs disposés entre les zones conductrices permettent d'obtenir des équipotentielles parfaitement droites, uniformes et parallèles.

Ainsi, le palpeur du manche de guidage en contact avec la surface résistante, relève en tout point une tension proportionnelle aux coordonnées de ce point.

Selon une version préférée de l'invention, le circuit électronique comprend une horloge à bascule électronique haute fréquence et un commutateur électronique adapté pour commuter à chaque demi-période le potentiel relevé par le palpeur vers deux sorties délivrant alternativement deux tensions proportionnelles aux coordonnées
du point de contact du palpeur sur la surface résistante.

Selon une version avantageuse de l'invention,
la courbe passant par les extrémités des éléments conducteurs
est un arc de cercle reliant des zones conductrices
constituées par des carrés métallisés inscrits dans
les sommets de la surface résistante carrée, les extrémités
de cette courbe en arc de cercle étant confondues avec
des sommets des carrés métallisés précités et les éléments
conducteurs étant constitués par des bandes métallisées,
parallèles et régulièrement espacées, la flèche de l'arc
de cercle défini par cette courbe étant égale à $n \times \frac{1}{8} \times \frac{e}{L}$

$\underline{n}$ étant le nombre de bandes conductrices,
$\underline{e}$ l'intervalle entre ces bandes conductrices et
L la longueur d'un côté des carrés métallisés.

Lorsque ces conditions sont respectées, les
équipotentielles de la surface résistante, sont parfaitement
droites et uniformes.

D'autres particularités et avantages de l'invention apparaîtront encore dans la description ci-après.

Aux dessins annexés donnés à titre d'exemples
non limitatifs:

- la figure 1 est une vue en coupe longitudinale
de la partie non électronique du dispositif conforme
à l'invention;

- la figure 2 est une vue en plan de la
surface résistante du dispositif selon la figure 1;

- la figure 3 est un schéma d'une partie
du circuit électronique associé au dispositif conforme
à l'invention;

- la figure 4 est le schéma de l'autre partie
de ce circuit électronique.

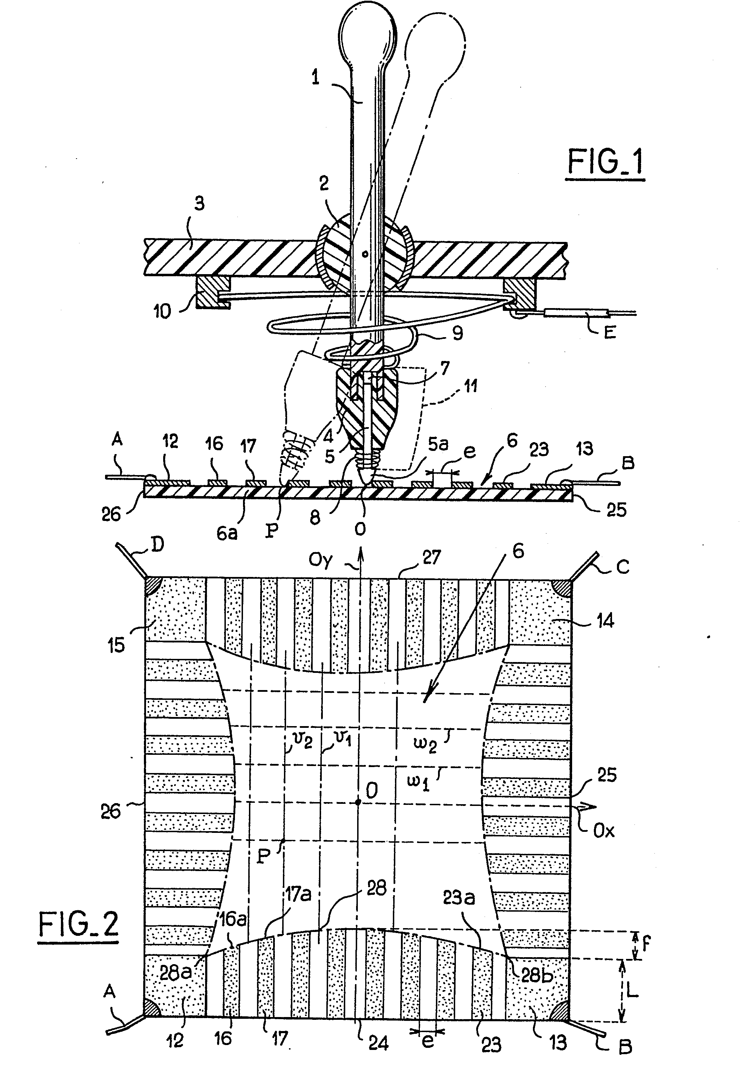

Dans la réalisation des figures 1 et 2, le

4

dispositif de guidage conforme à l'invention comprend
un manche de guidage 1 en matière électriquement isolante,
monté de façon mobile au moyen d'une rotule 2 dans un
support plan 3 également en matière isolante. La tête 4
du manche 1 porte un palpeur 5 constitué par une tige
métallique dont l'extrémité libre arrondie 5a est en
contact avec une surface électriquement résistante carrée 6.

Cette tige 5 est montée de façon coulissante
dans un canal axial 7 de la tête 4 du manche 1 et son
extrémité libre 5a est maintenue en appui contre la
surface résistante 6, au moyen d'un ressort 8.

La tête 4 du manche 1 est reliée au support 3
par un ressort en spirale 9 disposé autour du manche 1
qui rappelle ce dernier en position centrale (comme
indiqué sur la figure 1) dans laquelle l'extrémité 5a
de la tige 5 est en contact avec la surface résistante 6
au point de référence O.

Le ressort en spirale 9 est fixé au support 3
au moyen de plots métalliques 10 comportant une gorge
dans laquelle est engagé le ressort 9.

A l'un de ces plots métalliques 10 est fixé
un conducteur électrique E. Un fil conducteur 11 représenté
en pointillés sur la figure 1 relie le ressort 9 au ressort 8
qui est en contact avec l'extrémité 5a de la tige 5.
Cette extrémité 5a de la tige est ainsi reliée électriquement au conducteur E quelle que soit la position
de cette extrémité 5a sur la surface résistante 6.

La surface électriquement résistante 6 de
forme carrée comprend par exemple un support en matière
électriquement isolante sur laquelle est appliquée une
mince feuille d'alliage métallique électriquement résistante.

Dans le cas de la réalisation représentée
sur la figure 1, la surface résistante 6 est constituée d'une plaque 6a en matière plastique telle qu'une résine de diallylphtalate chargée de carbone ou d'oxydes métalliques.

La résistance de la surface résistante 6 peut varier entre 500 ohms et 300 kohms.

Cette surface résistante 6 porte (voir figure 2) quatre zones conductrices carrées 12, 13, 14, 15 réalisées par exemple par métallisation. Ces zones métallisées 12, 13, 14, 15 sont inscrites dans les sommets du carré défini par la surface résistante 6 et sont reliées respectivement à des conducteurs A, B, C, D.

Entre les zones métallisées carrées 12, 13, 14, 15, le long des côtés 24, 25, 26, 27 de la surface résistante 6, est disposée une série de bandes conductrices 16, 17, ..., 23 également métallisées, séparées les unes des autres par un intervalle constant e. Ces bandes conductrices 16, 17, ..., 23 s'étendent à partir d'un côté 24 de la surface résistante 6 et sont parallèles aux côtés adjacents 25, 26. Les extrémités 16a, 17a,..., 23a des bandes conductrices 16, 17, ..., 23 sont situées sur un arc de cercle 28 symétrique par rapport à la médiane Oy du côté 24 de la surface résistante carrée 6. Les extrémités 28a et 28b de l'arc de cercle 28 sont confondues avec les sommets des carrés métalliques 12, 13 dirigés vers l'intérieur de la surface résistante 6.

La flèche $f$ de l'arc de cercle 28 est définie par la relation $n \times \frac{1}{8} \times \frac{e}{L}$, $n$ étant le nombre de bandes métallisées, 16, 17, ..., 23, $e$ l'intervalle entre ces bandes et L étant la longueur d'un côté des carrés métallisés 12, 13, 14, 15.

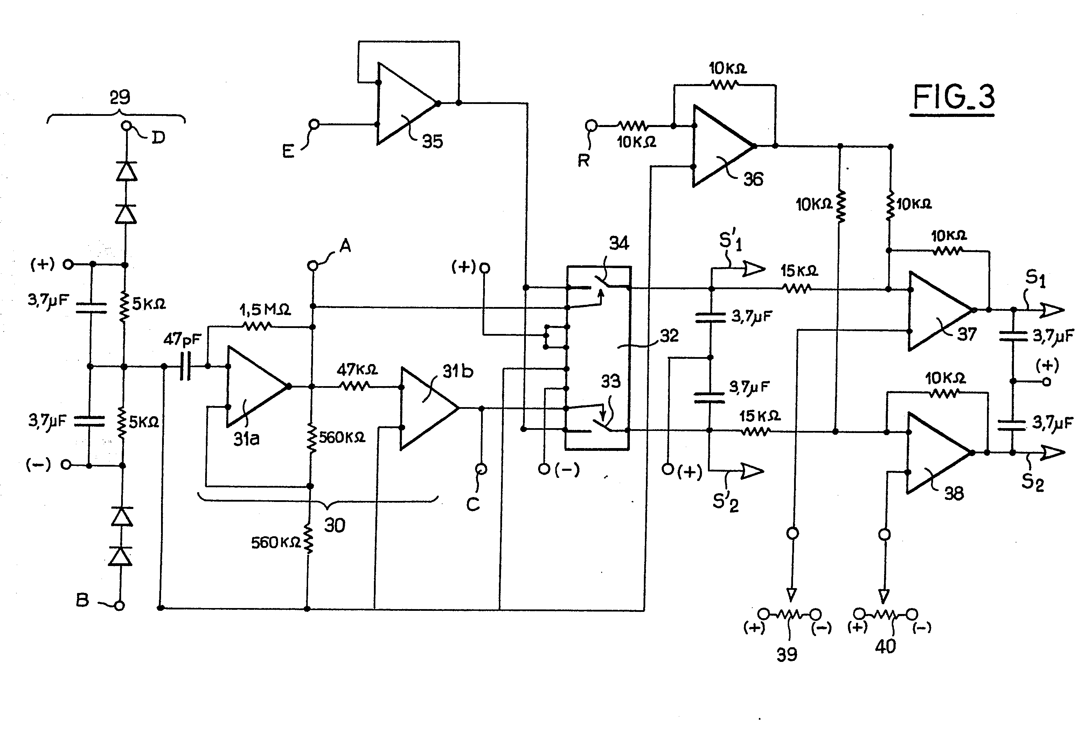

Le circuit électronique (fig. 3) associé au manche de guidage 1 et à la surface résistante 6 comprend un circuit d'alimentation 29 qui comporte une entrée (+) et une entrée (-) et des sorties B et D reliées respectivement aux zones métallisées 13 et 15 de la surface résistante 6.

Le potentiel de ces sorties D et B est respectivement égal à +V et -V ($\pm$ 5 volts à $\pm$ 30 volts).

L'alimentation 29 est reliée à un circuit 30 comprenant une horloge à bascule électronique de haute fréquence (plusieurs kHertz) qui comporte principalement deux amplificateurs 31a, 31b.

Ce circuit 30 présente deux bornes A et C reliées respectivement aux zones métallisées 12 et 14 de la surface résistante 6.

Le circuit 30 est suivi par un commutateur électronique 32 comportant des entrées (+) et (-) dont les interrupteurs 33 et 34 sont reliés électriquement aux bornes A et C précitées. Ces interrupteurs 33 et 34 sont également reliés par l'intermédiaire d'un amplificateur 35 à la borne E du manche de pilotage 1.

Les sorties $S'_1$ et $S'_2$ reliées aux interrupteurs 34 et 33 du commutateur 32 sont connectées alternativement par l'intermédiaire d'un amplificateur 36 à la borne R qui est porté à un potentiel de référence correspondant à celui mesuré au milieu O de la surface résistante 6.

Dans une version simplifiée du circuit électronique, les tensions délivrées aux sorties $S'_1$ et $S'_2$ peuvent être exploitées directement.

Dans la version complète, telle que représentée sur la figure 3, les sorties finales $S_1$ et $S_2$ sont reliées aux sorties $S'_1$ et $S'_2$ par des amplificateurs 37 et 38 qui sont associés chacun à un potentiomètre 39, 40 permettant de modifier individuellement les tensions délivrées aux sorties S1 et S2.

Le fonctionnement du dispositif que l'on vient de décrire est le suivant:

Les zones conductrices B et D sont portées respectivement aux potentiels fixes -V et +V délivrés par l'alimentation 29.

Les zones conductrices A et C sont portées respectivement et successivement aux potentiels suivants:

Première demi-période: A: potentiel +V C: potentiel -V

Deuxième demi-période: A: potentiel -V C: potentiel +V

et ainsi de suite...

L'horloge à bascule électronique 30, commute par l'intermédiaire du commutateur électronique 32 à chaque demi-période, le potentiel relevé par le palpeur 5 en contact avec la surface résistante 6 vers les sorties $S'_1$ et $S'_2$ ou $S_1$ et $S_2$.

Pendant une demi-période, on crée sur la surface résistante 6 des équipotentielles $v_1$, $v_2$, ... parallèles à deux côtés opposés (25, 26) de cette surface 6 et pendant la demi-période suivante, des équipotentielles $w_1$, $w_2$ ... qui sont parallèles aux deux autres côtés (24, 27).

Grâce aux bandes conductrices 16, 17,..., 23 et au fait que leurs extrémités 16a,... 23a soient situées sur un arc de cercle 28 satisfaisant à la relation $f = n \times \frac{1}{8} \times \frac{e}{L}$ précitée, les équipotentielles sont parfaitement parallèles et uniformes.

Dans ces conditions, les potentiels relevés par le palpeur 5 en un point quelconque P (voir position en pointillés du manche 1 de la figure 1)de la surface résistante 6 et délivrés aux sorties $S'_1$ et $S'_2$ ou $S_1$ et $S_2$ sont parfaitement proportionnelles aux coordonnées (x, y) du point P par rapport à l'origine O des axes Ox, Oy qui correspond au milieu de la surface résistante 6.

Les sorties $S_1$ et $S_2$ ou $S'_1$ et $S'_2$ peuvent être reliées directement à un appareil tel qu'un jeu

8

électronique dans lequel on veut déplacer sur un écran un ou plusieurs spots lumineux ou autres objets.

Ces sorties peuvent bien entendu être reliées à tout autre appareil dans lequel on veut déplacer, par rapport à des coordonnées orthogonales, des spots lumineux ou des objets ou encore un faisceau tel qu'un faisceau laser.

Grâce à la parfaite uniformité et reproductibilité des équipotentielles sur la surface résistante 6, tout déplacement du manche de guidage 1 s'accompagne d'une variation des deux tensions de sortie conforme à ce déplacement, ce qui permet de restituer avec une parfaite précision et fidélité le déplacement précité sur un autre appareil.

Etant donné que le dispositif conforme à l'invention ne comporte aucun organe mécanique susceptible de s'user par frottement et de créer des jeux mécaniques, ce dispositif ne nécessite aucun entretien et est parfaitement fiable. Par ailleurs, l'absence de potentiomètre et d'organe mécanique de liaison dans le dispositif conforme à l'invention, permet à ce dernier d'être peu encombrant.

Bien entendu, l'invention n'est pas limitée à l'exemple de réalisation que l'on vient de décrire et on peut apporter à celui-ci des modifications ou des perfectionnements sans sortir du cadre de l'invention.

Ainsi, les sorties $S_1$ et $S_2$ du circuit électronique représenté sur la figure 3 peuvent être reliées à un circuit d'échantillonnage-blocage et de mémorisation précédant des sorties finales X et Y.

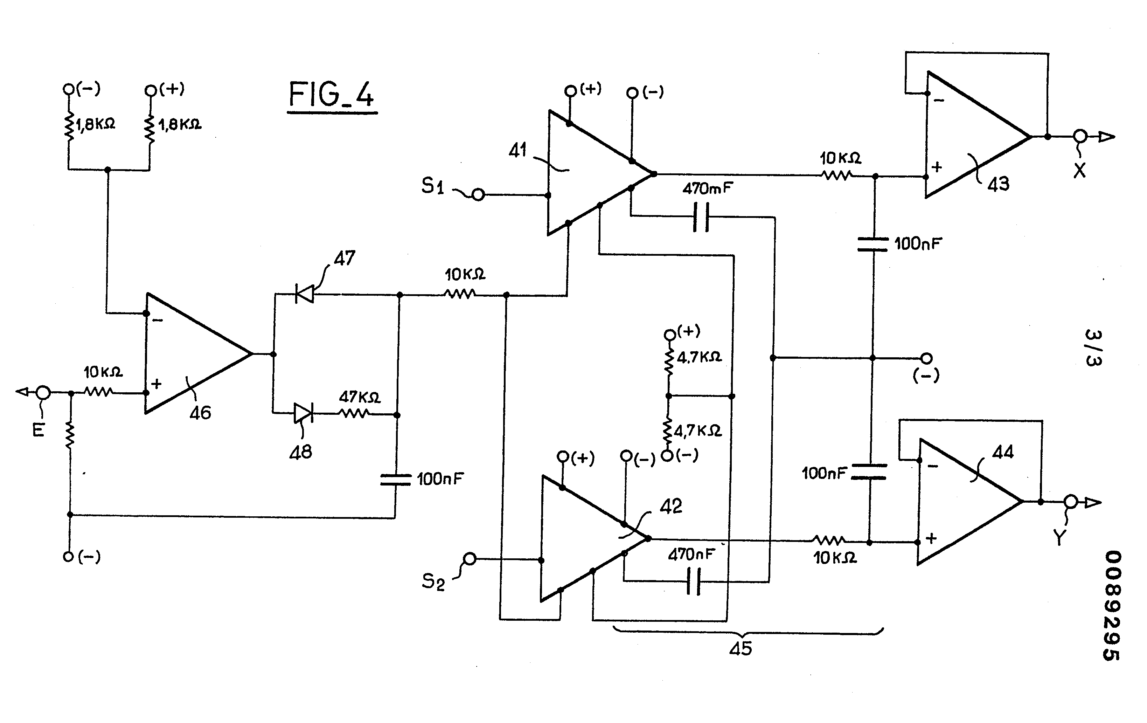

Ce circuit (voir figure 4) comporte deux échantillonneur - bloqueurs 41, 42 reliés respectivement aux sorties $S_1$ et $S_2$ et à deux amplificateurs suiveurs 43, 44 qui précèdent les sorties finales X,Y par l'intermédiaire d'un circuit de mémorisation désigné par la référence générale 45.

Les deux échantillonneur - bloqueurs 41 et 42 sont également reliés à la borne E du manche de guidage 1 par un circuit comprenant notamment un amplificateur 42 et deux diodes en parallèles et opposées 47 et 48.

Le circuit décrit sur la figure 4 a essentiellement pour but de mettre en mémoire ou bloquer la valeur des potentiels relevés à l'une des sorties $S_1$ ou $S_2$ pendant la demi-période où le circuit n'est pas alimenté.

On obtient ainsi aux sorties X et Y des tensions qui sont à tout moment, proportionnelles aux coordonnées de la position du manche de guidage 1 sur la surface résistante 6.

REVENDICATIONS

1. Dispositif électronique de guidage comprenant un manche de guidage (1) portant un palpeur (5)
déplaçable suivant un plan défini par des axes de coordonnées orthogonaux (Ox, Oy) associés à un circuit électronique capable de fournir pour tout point (P) du plan balayé
par le palpeur (5) deux tensions proportionnelles aux
coordonnées de ce point, caractérisé en ce que le palpeur
est déplaçable sur une surface électriquement résistante
(6) portant quatre zones conductrices (12, 13, 14, 15)
disposées aux sommets d'un carré et reliées respectivement
à un circuit électronique permettant d'appliquer à deux
zones conductrices diamétralement opposées (13, 15)
respectivement des potentiels fixes +V et -V et aux
deux autres zones conductrices (12, 14) alternativement
et respectivement des potentiels +V et -V et des potentiels
inverses -V et +V et en ce que le long des côtés (24,
25, 26, 27) du carré et entre les zones conductrices
(12,... 15) est disposée une série d'éléments conducteurs
(16, 17, ...) séparés les uns des autres et dont les
extrémités (16a, 17a, ...) dirigées vers le côté opposé
(27) sont situées sur une courbe (28) dont la convexité
est dirigée vers ledit côté opposé (27) et qui est symétrique par rapport à la médiane (Oy) passant par ce côté.

2. Dispositif conforme à la revendication 1,
caractérisé en ce que le circuit électronique comprend
une horloge (30) à bascule électronique haute fréquence
et un commutateur électronique (32) adapté pour commuter
à chaque demi-période le potentiel relevé par le palpeur
(5) vers deux sorties (S'$_1$, S'$_2$) ou (S$_1$, S$_2$) délivrant
alternativement deux tensions proportionnelles aux coordonnées du point de contact (P) du palpeur (5) sur la
surface résistante (6).

3. Dispositif conforme à l'une quelconque des revendications 1 ou 2, caractérisé en ce que la courbe (28) passant par les extrémités (16a, 17a...) des éléments conducteurs (16, 17...) est un arc de cercle reliant les zones conductrices (12, 13, 14, 15).

4. Dispositif conforme à la revendication 3, caractérisé en ce que les zones conductrices (12, 13, 14, 15) sont des carrés métallisés inscrits dans les sommets de la surface résistante carrée (6), en ce que les extrémités (28a, 28b) de la courbe en arc de cercle (28) sont confondues avec les sommets des carrés métallisés (12, 13,...) dirigés vers l'intérieur de la surface résistante (6), et en ce que les éléments conducteurs (16, 17,...) sont des bandes métallisées parallèles et régulièrement espacées et en ce que la flèche (f) de l'arc de cercle (28) est définie par la relation:

$$f = n \times \frac{1}{8} \times \frac{e}{L}$$

n étant le nombre de bandes conductrices (16, 17...), e l'intervalle entre ces bandes conductrices et L la longueur d'un côté des carrés métallisés (12, 13,...).

5. Dispositif conforme à l'une quelconque des revendications 2 à 4, caractérisé en ce que le circuit électronique comporte un potentiomètre (39, 40) associé à chacune des deux sorties ($S_1$, $S_2$).

6. Dispositif conforme à l'une quelconque des revendications 2 à 5, caractérisé en ce que les sorties ($S_1$, $S_2$) sont reliées à un circuit d'échantillonnage-blocage (41, 42) et de mémorisation (45) des valeurs des tensions fournies aux sorties précitées.

1/3

## FIG_1

## FIG_2

FIG.3

FIG_4

3/3

0089295